# EUROPÄISCHE PATENTSCHRIFT

(11) **EP 2 263 215 B1**
(45) Veröffentlichungstag und Bekanntmachung des Hinweises auf die Patenterteilung: **08.08.2012**
(21) Anmeldenummer: 09728999.5
(22) Anmeldetag: 16.02.2009
(51) Int. Cl.: H04L 9/00, G06F 21/00

(54) **KOMMUNIKATIONSVERFAHREN EINER ELEKTRONISCHEN GESUNDHEITSKARTE MIT EINEM LESEGERÄT**
COMMUNICATION METHOD OF AN ELECTRONIC HEALTH INSURANCE CARD WITH A READING DEVICE
PROCÉDÉ DE COMMUNICATION ENTRE UNE CARTE DE SANTÉ ÉLECTRONIQUE ET UN APPAREIL DE LECTURE

(30) Priorität: 31.03.2008 DE 102008000897
(43) Veröffentlichungstag der Anmeldung: 22.12.2010
(60) Teilanmeldung: 12163261.6
(73) Patentinhaber: CompuGroup Medical AG, 56070 Koblenz (DE)
(72) Erfinder: GOTTHARDT, Frank, 56337 Eitelborn (DE)
(74) Vertreter: Richardt Patentanwälte GbR
(86) Internationale Anmeldenummer: PCT/EP2009/051817
(87) Internationale Veröffentlichungsnummer: WO 2009/121657

(56) Entgegenhaltungen:
- EP-A- 1 890 270
- WO-A-00/54125
- DE-B3-102004 051 296
- US-A1- 2003 046 560
- US-A1- 2007 118 891
- US-B1- 6 523 116
- RANKL / EFFING: "HANDBUCH DER CHIPKARTEN" 1999, HANSER , GERMANY , XP002530086 Seite 51 Seite 187 - Seite 203 Seite 222 - Seite 244 Seite 397 - Seite 433 Seite 441 - Seite 442 Seite 457 - Seite 465

## Beschreibung

Die Erfindung betrifft ein Kommunikationsverfahren einer elektronischen Gesundheitskarte mit einem Lesegerät, sowie ein Computerprogrammprodukt.

Die elektronische Gesundheitskarte (siehe z.B. die Offenbarung der Firma Gematik "Spezifikation der elektronischen Gesundheitskarte", Teile 1-3), abgekürzt eGK, soll seit Beginn des Jahres 2006 die Krankenversicherungskarte in Deutschland ersetzen. Ziel ist es dabei, eine Datenübermittlung zwischen medizinischen Leistungserbringern, Krankenkassen, Apotheken und Patienten in Zukunft kostengünstiger zu gestalten, zu vereinfachen und zu beschleunigen. Dazu gehört unter anderem auch die Ermöglichung eines Zugriffs auf einen elektronischen Arztbrief, einer elektronischen Krankenakte, sowie des elektronischen Rezeptes mit Hilfe der elektronischen Gesundheitskarte. Auf der elektronischen Gesundheitskarte ist aufgrund des dort verfügbaren geringen Speicherplatzes nur ein gewisser Teil von Pflichtangaben gespeichert. So sind z. B. Angaben zur Identität des Patienten, zur Notfallversorgung und optional auch Vermerke, z. B. zum Organspenderstatus des Patienten auf der Karte gespeichert. Der Zugriff auf Dokumentationen zu eingenommenen Medikamenten, dem elektronischen Arztbrief, der elektronischen Krankenakte und dem elektronischen Rezept erfolgt über gesicherte Zugangsknoten zu Fachdiensten der Telematik-Infrastruktur.

Die DE 10 2004 051 296 B3 beschreibt ein Verfahren zur Speicherung von Daten und zur Abfrage von Daten, sowie entsprechende Computerprogrammprodukte. Eine personalisierte Chipkarte ermöglicht die Speicherung einer virtuellen Patientenakte auf einem Datenserver. Unter Verwendung der Chipkarte können Daten, wie z. B. eine Patientenakte, von einem Praxis-EDV-System einer Arztpraxis verschlüsselt an den Datenserver übertragen werden.

Aus der DE 102 58 769 A1 ist eine weitere Anwendung von Chipkarten für Patientendaten bekannt.

Aus dem Stand der Technik bekannte Gesundheitskarten sind kontaktbehaftet. Dies bedeutet, dass zur Verwendung einer Chipkarte in Form einer elektronischen Gesundheitskarte diese in ein Lesegerät eines z. B. Apotheken-Informationssystems eingeführt werden muss, so dass daraufhin ein entsprechender Zugriff auf beispielsweise elektronische Rezeptdaten ermöglicht wird.

Der Erfindung liegt demgegenüber die Aufgabe zugrunde, ein verbessertes Kommunikationsverfahren einer elektronischen Gesundheitskarte mit einem Lesegerät, sowie ein verbessertes Computerprogrammprodukt zu schaffen.

Die der Erfindung zugrundeliegenden Aufgaben werden jeweils mit den Merkmalen der unabhängigen Patentansprüche gelöst.

Erfindungsgemäß wird ein Kommunikationsverfahren zur Kommunikation zwischen einer elektronischen Gesundheitskarte und einem Lesegerät geschaffen, wobei zwischen der elektronischen Gesundheitskarte und dem Lesegerät eine Kommunikationsverbindung aufgebaut wird, wobei es sich bei der Kommunikationsverbindung um eine Nahfeldverbindung handelt. Bei der Kommunikationsverbindung handelt es sich nach einer Ausführungsform der Erfindung um eine sicherte Kommunikationsverbindung, dh. eine Kommunikationsverbindung, bei welcher z.B. ein secure messaging Verfahren Verwendung findet.

Das erfindungsgemäße Kommunikationsverfahren hat den Vorteil, dass Patienten beispielsweise in einer Apotheke nicht mehr die elektronische Gesundheitskarte in ein entsprechendes Lesegerät einführen müssen. Dieses Extra-Einführen der Chipkarte in das Lesegerät hat in der Vergangenheit zu verschiedenen Problematiken geführt. Eine Hauptproblematik liegt in dem Verschleiß des Lesegerätes, da für jede Bedienung eines Patienten in einer Apotheke ein Lesevorgang durchgeführt werden muss. Durch das erfindungsgemäße kontaktlose Kommunikationsverfahren ist ein Verschleiß sowohl von Gesundheitskarten als auch entsprechenden Lesegeräten ausgeschlossen.

Eine weitere Problematik ergab sich in der Vergangenheit dadurch, dass entweder die Patienten selbst die Gesundheitskarte in das Lesegerät eingeführt haben oder aber dass Patienten die Gesundheitskarte z. B. dem Apothekenpersonal überreicht haben, woraufhin diese die Gesundheitskarte in ein entsprechendes Lesegerät eingeführt haben. Beide Praktiken haben sich in der Vergangenheit als zeitaufwendig erwiesen, da bei einem selbstständigen Einführen der Gesundheitskarte in das Lesegerät die Gesundheitskarte oft falsch herum, das heißt mit der falschen Ausrichtung des Chips relativ zum Lesekopf des Lesegeräts, eingeführt wurde, oder weil durch das Heraussuchen der Gesundheitskarte beispielsweise aus einem Geldbeutel des Patienten, das Überreichen an das Apothekenpersonal, das Auslesen der Gesundheitskarte durch ein entsprechendes Lesegerät, das Zurücküberreichen der Gesundheitskarte an den Patienten, usw., wertvolle Zeit verschwendet wurde, welche den eigentlichen Bedienvorgang eines Patienten wesentlich verlangsamt hat.

Durch die Verwendung eines kontaktlosen Kommunikationsverfahrens werden all diese Nachteile vermieden.

Nach einer Ausführungsform der Erfindung wird die Kommunikationsverbindung durch ein RFID-Verfahren aufgebaut. RFID-Systeme beinhalten im Allgemeinen sowohl eine Sende-/Empfangseinheit seitens des Lesegeräts und einen Transponder seitens des RFID-Chips. Der Transponder wird auch als RFID-Etikett, RFID-Chip, RFID-Tag, RFID-Label oder Funketikett bezeichnet. Bei RFID-Systemen handelt es sich um Radio Frequency-Identification-Systems, so genannte Funkerkennungssysteme. Die Kommunikation zwischen RFID-Transponder und Lesegerät erfolgt typischerweise über hochfrequente elektromagnetische Wechselfelder.

Die Verwendung eines RFID-Verfahrens hat den Vorteil, dass die elektronische Gesundheitskarte ohne eigene Stromversorgung verwendet werden kann. Durch ein elektromagnetisches Hochfrequenzfeld des Lesegeräts wird der Transponder der elektronischen Gesundheitskarte mit Energie versorgt, wodurch eine aktive Stromversorgung der Gesundheitskarte entfällt. Dies hat mehrere Vorteile. Zum einen muss sich ein Patient nach einmaligem Ausstellen und Erhalt seiner personalisierten Gesundheitskarte nicht mehr um die "Pflege" der Gesundheitskarte kümmern. Einmal ausgestellt und aktiviert, wird die Karte ihren Dienst für den gesamten Ausstellungszeitraum der Karte verrichten. Des weiteren hat die Verwendung der RFID-Technik den Vorteil, dass diese miniaturisiert in weitere bereits existierende Geräte und Karten implementiert werden kann: beispielsweise ist es möglich, aufgrund der miniaturisierten RFID-Technik die elektronische Gesundheitskarte in ein bestehendes Ausweisdokument zu integrieren. Beispielsweise bietet sich hier die Möglichkeit, auf ein bestehendes Ausweisdokument, wie z. B. einen Führerschein, eine dünne Folie aufzukleben, welche den RFID-Chip der elektronischen Gesundheitskarte enthält. In diesem fall bleibt es jedem Patienten selbst überlassen, mit welcher personalisierten Karte er die elektronische Gesundheitskarte kombinieren will. Hier bieten sich z. B. Kreditkarten, Geldkarten, Führerscheine, Personalausweise und vieles mehr an. Alternativ ist es auch möglich, aufgrund der geringen Größe des RFID-Chips den RFID-Chip in Armbanduhren, mobile Telekommunikationsgeräte, usw. zu implementieren. Eine weitere Möglichkeit besteht darin, den RFID-Chip direkt unter die menschliche Haut zu implantieren. Aufgrund der geringen Größe des RFID-Chips besteht hier keinerlei Gesundheitsrisiko.

Nach einer Ausführungsform der Erfindung umfasst das Kommunikationsverfahren ferner den Schritt des Authentifizierens des Nutzers der elektronischen Gesundheitskarte gegenüber der elektronischen Gesundheitskarte selbst. Dies kann auf verschiedene Art und Weise erfolgen.

Nach einer Ausführungsform der Erfindung erfolgt eine Eingabe einer Benutzeridentifikation am Lesegerät, gefolgt von einer Übertragung einer Anforderung zur Fernüberprüfung der Benutzeridentifikation von dem Lesegerät an die elektronische Gesundheitskarte und der Durchführung der Fernüberprüfung der Benutzeridentifikation durch die elektronische Gesundheitskarte. Unter einer "Fernüberprüfung" wird hier jedes Verfahren verstanden, bei dem die zu überprüfende Kennung nicht an die Gesundheitskarte zur Authentifizierung direkt z.B. verschlüsselt übertragen werden muss, sondern bei dem die Überprüfung mittels eines das Lesegerät und die Gesundheitskarte involvierenden Protokolls erfolgt. Entsprechende Protokolle sind an sich aus dem Stand der Technik bekannt, wie zum Beispiel Strong Password Only Authentication Key Exchange (SPEKE), Diffie-Hellman Encripted Key Exchange (DH-EKE), Bellovin-Merritt Protokoll oder Password Authenticated Connection Establishment (PACE).

Nach einer weiteren dazu alternativen Ausführungsform der Erfindung erfolgt eine Eingabe einer Benutzer-Identifikation am Lesegerät, eine Verschlüsselung der Benutzer-Identifikation durch das Lesegerät mit einem öffentlichen Gesundheitskartenschlüssel der Gesundheitskarte und ein Senden der verschlüsselten Benutzer-Identifikation an die elektronische Gesundheitskarte. Daraufhin entschlüsselt die elektronische Gesundheitskarte die empfangene verschlüsselte Benutzer-Identifikation, wobei die Entschlüsselung mittels eines privaten Gesundheitskartenschlüssels erfolgt, wobei in der elektronischen Gesundheitskarte der private Gesundheitskartenschlüssel elektronisch gespeichert ist, wobei der öffentliche und der private Gesundheitskartenschlüssel ein asymmetrisches kryptografisches Schlüsselpaar bilden, wobei das Anmelden erfolgreiche ist, wenn die entschlüsselte Benutzer-Identifikation durch die Gesundheitskarte verifiziert wurde.

Das Authentifizieren des Nutzers der elektronischen Gesundheitskarte gegenüber der elektronischen Gesundheitskarte hat den Vorteil, dass gewährleistet ist, dass ein Missbrauch von gestohlenen oder verlorengegangenen elektronischen Gesundheitskarten weitgehend verhindert wird. Ausschließlich der Besitzer der elektronischen Gesundheitskarte, der auch gleichzeitig über die Benutzer-Identifikation verfügt, ist in der Lage, sich gegenüber der elektronischen Gesundheitskarte als rechtmäßiger Besitzer zu identifizieren. Als Benutzer-Identifikation kommt hierbei beispielsweise die Verwendung einer PIN in Betracht, welche am Lesegerät bzw. an einem am Lesegerät angeschlossenen Tastenblock eingegeben wird. Ebenso ist es möglich, als Benutzer-Identifikation ein biometrisches Merkmal des Eigentümers der elektronischen Gesundheitskarte einzugeben. Beispielsweise kann dies in Form eines Fingerabdruck-Scans erfolgen.

Dadurch, dass zur gesicherten Kommunikation eine Verschlüsselung der Benutzer-Identifikation mit dem öffentlichen Gesundheitskartenschlüssel der Gesundheitskarte erfolgt, wird der Datenaustausch zwischen Gesundheitskarte und Lesegerät minimiert: Eine Aushandlung von Schlüsseln ist nicht erforderlich, was insbesondere im Hinblick auf die Leistungsfähigkeit von RFID-Prozessoren von Vorteil ist: Aufgrund der ohnehin vorgesehenen Chipkarten-Fähigkeiten einer elektronischen Gesundheitskarte ist in jeder Gesundheitskarte bereits die Funktionalität implementiert, dass empfangene Daten unter Verwendung des privaten Gesundheitskartenschlüssels durch die Gesundheitskarte entschlüsselt werden können. Die Implementierung einer zusätzlichen Funktionalität in Form der Verifizierung einer entschlüsselten PIN stellt daher für eine Implementierung in Form eines RFID-Chips keinerlei Problematik dar, da dies weder hohe zusätzliche Rechenkapazitäten noch großen zusätzlichen Speicherplatz benötigt. Um bei der Verwendung von Benutzer-Identifikationen in Form von biometrischen Merkmalen die Rechen- und Speicherkapazität der elektronischen Gesundheitskarte zu minimieren, bietet es sich hier an, beispielsweise bei der Fingerprint-Erkennung lediglich einige wenige Merkmale zu verifizieren, wie z. B. die Lage der Fingerbild-Wirbel, der Knotenpunkte, Linienenden usw.

Nach einer weiteren Ausführungsform der Erfindung wird der öffentliche Gesundheitskartenschlüssel von der Gesundheitskarte selbst oder von einer externen Datenbank abgerufen. Letzteres ist aus den obig genannten Gründen bevorzugt, da damit der Datenaustausch zwischen Gesundheitskarte und Lesegerät minimiert werden kann. Im Falle des Abrufens des öffentlichen Gesundheitskartenschlüssels von einer externen Datenbank müsste von der Gesundheitskarte lediglich eine entsprechende kryptische Patientenkennung an das Lesegerät übertragen werden, auf Basis derer das Lesegerät den öffentlichen Gesundheitskartenschlüssel aus der externen Datenbank abrufen kann. Es sei hier angemerkt, dass das Konzept der elektronischen Gesundheitskarte ohnehin die Verwendung von öffentlichen Gesundheitskartenschlüsseln vorsieht, so dass hier eine Integration des erfindungsgemäßen Kommunikationsverfahrens in bestehende Telematik-Infrastrukturen ohne weiteres und ohne Änderung der Infrastruktur möglich ist.

Gemäß der Erfindung umfasst das Kommunikationsverfahren ferner den Schritt des Authentifizierens des Lesegeräts gegenüber der elektronischen Gesundheitskarte, wobei nach erfolgreicher Authentifizierung eine Freigabe von Daten zur Datenübertragung von der Gesundheitskarte an das Lesegerät erfolgt, wobei die Daten auf der Gesundheitskarte gespeichert sind. Ein solches Authentifizieren des Lesegeräts gegenüber der elektronischen Gesundheitskarte hat den Vorteil, dass ein Datenaustausch zwischen elektronischer Gesundheitskarte und Lesegerät überhaupt dann erst stattfindet, wenn sich die Gesundheitskarte sicher sein kann, dass das Lesegerät zum Zugriff auf die Gesundheitskarte überhaupt befugt ist. Damit wird wirkungsvoll ein unbemerktes Kontaktaufnehmen beliebiger unbefugter Lesegeräte mit der elektronischen Gesundheitskarte verhindert. Beispielsweise genügt es damit nicht, für den Fall einer PIN-Authentifizierung eines Benutzers gegenüber der Gesundheitskarte die richtige PIN durch kontinuierliches Durchprobieren aller möglichen Kombinationen mittels eines "Brute-Force-Angriffs" zu erlangen. Die elektronische Gesundheitskarte wird ausschließlich mit solchen Geräten kommunizieren, welches sich als berechtigt gegenüber der elektronischen Gesundheitskarte authentifizieren können.

Es umfasst das Authentifzieren die Schritte des Empfangs eines digitalen Zertifikats durch die elektronische Gesundheitskarte von dem Lesegerät, der Überprüfung der Zertifikats durch die elektronische Gesundheitskarte, wobei das Lesegerät authentifiziert ist, wenn die Zertifkatsprüfung erfolgreich ist. Nach erfolgreicher Zertifikatsüberprüfung, erfolgt der Schritt der Freigabe der Übertragung der Daten von der elektronischen Gesundheitskarte an das Lesegerät, wobei die zur Übertragung vorgesehenen Daten durch die im Zertifikat spezifizierten Zugriffsberechtigungen bestimmt sind.

Durch die Überprüfung des Zertifikats durch die elektronische Gesundheitskarte beispielsweise unter Verwendung einer Public-Key-Infrastruktur (PKI) wird sichergestellt, dass das Lesegerät vertrauenswürdig ist. Somit kann sich ein Benutzer der elektronischen Gesundheitskarte sicher sein, dass lediglich zertifizierte Stellen mit der elektronischen Gesundheitskarte kommunizieren werden.

Alternativ zur Verwendung einer Public-Key-Infrastruktur ist es auch möglich, auf der Karte selbst entsprechende öffentliche Schlüssel und die die Schlüssel verifizierenden Zertifikate abzulegen, so dass zur Zertifikat-Verifizierung die elektronische Gesundheitskarte lediglich auf interne Speicherbereiche zugreifen muss. Eine solche Zertifikatsüberprüfung ist beispielsweise als "Card-Verifiable-Certificate (CVC)" bekannt.

Die Verwendung von Zertifikaten zur Authentifizierung des Lesegeräts gegenüber der Gesundheitskarte hat ferner den Vorteil, dass Zertifikate in der Regel auch Informationen über den zulässigen Anwendungs- und Geltungsbereich des Zertifikats enthalten. In anderen Worten sind in dem Zertifikat entsprechende Zugriffsberechtigungen spezifziert, so dass die Gesundheitskarte anhand des Zertifikats feststellen kann, auf welche Bereiche ein entsprechendes Lesegerät zugreifen darf. So ist es z. B. wünschenswert, dass ein behandelnder Arzt Zugriff auf alle Datenbereich der Karte hat, wohingegen ein Apotheken-Informationssystem lediglich auf solche Bereiche zugreifen darf, welche zur Aushändigung von Medikamenten aufgrund eines elektronischen Rezepts notwendig sind. So könnte z. B. ein Arzt auf umfangreiche elektronische Krankenakten unter Verwendung der elektronischen Gesundheitskarte zugreifen dürfen, wohingegen einem Apotheken-Informationssystem lediglich der Zugriff auf hinterlegte Rezeptdaten gestattet ist. Es sei hier darauf hingewiesen, dass die Rezeptdaten und Krankenakten nicht auf der elektronischen Gesundheitskarte selbst abgelegt sind oder sein müssen, sondern dass vorzugsweise die elektronische Gesundheitskarte lediglich Speicherbereiche mit entsprechenden Verweisen auf extern gespeicherte Daten enthält. Das heißt, die mit dem Zertifikat spezifizierten Zugriffsberechtigungen erlauben es vorzugsweise lediglich, entsprechende Speicherverweise der elektronischen Gesundheitskarte auszulesen, so dass daraufhin die Daten in Form von Rezeptdaten oder Patientenakten von entsprechenden Servern anhand der Speicherverweise abgerufen werden können.

Nach erfolgreicher Zertifikatsüberprüfung werden in der Gesundheitskarte gespeicherte Bilddaten von der Gesundheitskarte an das Lesegerät gesendet, wobei die Bilddaten zumindest ein Gesichtsbild des Inhabers der Gesundheitskarte aufweisen. Daraufhin wird das in den Bilddaten enthaltene Bild visuell am Lesegerät oder an einem an dem Lesegerät angeschlossenen Datenverarbeitungssystem angezeigt, um eine Sichtprüfung zu ermöglichen.

In anderen Worten wird nach erfolgreicher Zertifikatsüberprüfung auf einem Bildschirm beispielsweise einem Arzt oder einem Apotheker das auf der Patientenkarte gespeicherte Lichtbild des Patienten angezeigt. Dadurch kann der Arzt oder Apotheker durch eine einfache Sichtprüfung entscheiden, ob der momentane Besitzer der Gesundheitskarte auch deren rechtmäßiger Eigentümer ist. Der Arzt wird einen weiteren Zugriff auf die Gesundheitskarte nur dann gegenüber dem Lesegerät bzw. Datenverarbeitungssystem bestätigen und genehmigen, wenn offensichtlich kein Missbrauch der elektronischen Gesundheitskarte vorliegt. Dieses Verfahren ist insbesondere deshalb vorteilhaft, da hier der Patient keinerlei Handlungen vornehmen muss, um seine elektronische Gesundheitskarte zu benutzen. Dennoch ist ein Missbrauch der elektronischen Gesundheitskarte nahezu ausgeschlossen.

Die Verwendung der elektronischen Gesundheitskarte ohne jedwede Interaktion ihres Besitzers hat noch weitere Vorteile. Beispielsweise können wie oben erwähnt auf der Gesundheitskarte Notfalldaten, wie z. B. Adressdaten, nächster Angehöriger, Blutgruppe, eingenommene Medikamente usw. gespeichert sein. In einem Notfall ist es damit möglich, dass in einem Krankenwagen bei Eintreffen am Unfallort automatisch auf einem Display Informationen zum Patienten angezeigt werden, ohne dass es eines zeitaufwendigen Durchsuchens des Patienten nach einer entsprechenden Patientenkarte bedarf. Hier können wertvolle Sekunden gewonnen werden, wobei sich zusätzlich durch die Anzeige des Gesichtsbildes des Patienten der behandelnde Arzt sicher sein kann, am Unfallort über z. B. die richtige Blutgruppe genau dieses Patienten informiert worden zu sein.

Ein weiterer Anwendungsbereich ist beispielsweise auch die erweiterte Verwendung der elektronischen Gesundheitskarte innerhalb von Krankenhäusern: Beispielsweise können innerhalb eines Krankenhauses geplante Untersuchungsverfahren für einen Patienten direkt mit dessen elektronischer Gesundheitskarte verknüpft werden. Wenn also beispielsweise ein Patient zunächst in einer Abteilung geröntgt werden soll, genügt es, wenn der Patient lediglich die Gesundheitskarte ständig bei sich trägt. Sobald der Patient im Röntgenbereich erscheint, wird das entsprechende Lichtbild des Patienten auf einem Bildschirm des Bedienpersonals eingeblendet, so dass dieses nach entsprechender Bestätigung direkten Zugriff auf die Krankenakte des Patienten hat. Fehlerhafte, doppelte oder unnötige Untersuchungen werden damit weitestgehend vermieden, da das Bedienpersonal z. B. der Röntgenabteilung aufgrund der vollständig vorliegenden Akte und damit auch der entsprechenden ärztlichen Untersuchungsverordnungen nach Sichtprüfung des Patienten lediglich die Untersuchungen vornehmen wird, welche auch mit der Gesundheitskarte verknüpft in der Krankenakte des Patienten vermerkt sind. Dieses Verfahren lässt sich sogar dahingehend ausdehnen, dass entsprechende ärztliche Eingriffe bis hin zu aufwendigen Operationen mit der elektronischen Gesundheitskarte verknüpft sind: Wird ein Patient für eine Operation vorbereitet und trägt er dabei die elektronische Gesundheitskarte bei sich, ist es behandelnden Ärzten ohne großen Aufwand möglich, festzustellen, ob das vorbereitete Operationsverfahren auch für den gegenwärtig behandelten Patienten vorgesehen ist. Damit entfällt das Risiko einer Patientenverwechslung aufgrund der Möglichkeit der Sichtprüfung nahezu vollständig.

Nach einer weiteren Ausführungsform der Erfindung umfasst das Kommunikationsverfahren ferner den Schritt des Authentifizierens des Benutzers der elektronischen Gesundheitskarte gegenüber der elektronischen Gesundheitskarte selbst, wobei nach erfolgter Zertifikatsüberprüfung die Schritte des Sendens einer Benutzer-Identifikation von der Gesundheitskarte an das Lesegerät und dem Empfang einer Benutzereingabe am Lesegerät ausgeführt werden, wobei der Benutzer der elektronischen Gesundheitskarte erfolgreich authentifiziert ist, wenn die Benutzer-Identifikation mit der Benutzereingabe übereinstimmt. In anderen Worten bedarf es hier eine Interaktion eines Benutzers, das heißt eines Patienten, um einen Zugriff auf die elektronische Gesundheitskarte zu ermöglichen bzw. zu erlauben. Bei der Benutzer-Identifikation kann es sich wiederum um eine PIN, eine Buchstabenkombination oder auch um ein beliebiges biometrisches Merkmal handeln. Dadurch, dass die Benutzer-Identifikation mit der Benutzereingabe direkt am Lesegerät verglichen wird, ist gewährleistet, dass eine elektronische Gesundheitskarte nicht so manipuliert werden kann, dass ein entsprechendes Lesegerät getäuscht wird und der Meinung ist, ihm liege eine zur Kommunikation autorisierte elektronische Gesundheitskarte vor, die auch dem aktuellen Besitzer der Gesundheitskarte gehört.

Erfindungsgemäß umfasst das Kommunikationsverfahren ferner den Schritt des Anmeldens der elektronischen Gesundheitskarte an dem Lesegerät, wobei beim Anmelden eine Kennung optisch von der elektronischen Gesundheitskarte durch das Lesegerät gelesen und ein Challenge-Response-Verfahren zwischen der elektronischen Gesundheitskarte und dem Lesegerät durchgeführt wird, wobei für eine Verschlüsselung beim Challenge-Response-Verfahren eine Verschlüsselung unter Verwendung der Kennung erfolgt.

Dies hat den Vorteil, dass ein Besitzer der elektronischen Gesundheitskarte in der Lage ist zu bestimmen, wann eine Kommunikation zum Auslesen von Daten aus der elektronischen Gesundheitskarte stattfindet: Eine solche Kommunikation findet nämlich nur dann statt, wenn der Besitzer der Gesundheitskarte aktiv die Gesundheitskarte beispielsweise vor einen entsprechenden Scanner hält. Die Kennung, welche zur Verschlüsselung beim Challenge-Response-Verfahren verwendet wird, kann ein beliebiger personalisierter maschinenlesbarer Code sein. Dabei kann die Kennung beispielsweise selbst direkt als Schlüssel dienen. Möglich ist jedoch auch, unter Verwendung von entsprechenden Algorithmen aus der Kennung einen entsprechenden symmetrischen oder auch asymmetrischen Schlüssel zu erzeugen, unter dessen Verwendung das Challenge-Response-Verfahren abläuft.

Bei der Kennung handelt es sich um einen öffentlichen Gesundheitskartenschlüssel, wobei ferner in der elektronischen Gesundheitskarte selbst ein privater Gesundheitskartenschlüssel elektronisch gespeichert ist, wobei der öffentliche und der private Gesundheitskartenschlüssel ein asymmetrisches kryptografisches Schlüsselpaar bilden. Beispielsweise kann der öffentliche Gesundheitskartenschlüssel in Form eines zweidimensionalen Strichcodes auf der Gesundheitskarte selbst aufgedruckt sein. Dies stellt keinerlei Sicherheitsrisiko dar, da der öffentliche Gesundheitskartenschlüssel ohnehin öffentlich zugänglich ist und keinerlei Rückschlüsse auf die Identität des Patienten erlaubt.

Um die Sicherheit bei der Verwendung des Challenge-Response-Verfahrens weiter zu erhöhen, umfasst das Challenge-Response-Verfahren nach einer weiteren Ausführungsform der Erfindung ferner den Schritt des Empfangs eines Autorisierungsschlüssels am Lesegerät, der Erzeugung eines Sitzungsschlüssels anhand der Kennung und des Autorisierungsschlüssels am Lesegerät und der Durchführung des Challenge-Response-Verfahrens unter Verwendung des Sitzungsschlüssels, wobei der Sitzungsschlüssel ferner auf der elektronischen Gesundheitskarte gespeichert ist. Beispielsweise kann es sich bei dem Autorisierungsschlüssel um einen Masterkey handeln, welcher auf einem Heilberufsausweis eines Gesundheitsdienstleisters abgespeichert ist. Somit genügt es nicht, lediglich im Besitz eines entsprechenden Lesegeräts zu sein, sondern zur Bedienung des Lesegeräts zum Zugriff auf die elektronische Patientenkarte wird zusätzlich noch der Autorisierungsschlüssel des Heilberufsausweises benötigt. Der Autorisierungsschlüssel des Heilberufsausweises ist dabei ein geheimer Schlüssel, welcher im Rahmen der Personalisierung der elektronischen Gesundheitskarte zusammen mit der Kennung der elektronischen Gesundheitskarte dazu verwendet wurde, um einen Sitzungsschlüssel zu erzeugen, welcher in einem gesicherten Speicherbereich der elektronischen Gesundheitskarte abgelegt wurde. Je nach verwendetem Algorithmus ist es hier möglich, symmetrischen oder asymmetrische Schlüsselpaare zu verwenden.

In einem weiteren Aspekt betrifft die Erfindung ein Computerprogrammprodukt mit von einem Prozessor ausführbaren Instruktionen zur Durchführung der Verfahrensschritte des erfindungsgemäßen Kommunikationsverfahrens.

Beschrieben ist ferner eine elektronische Gesundheitskarte, wobei die Gesundheitskarte eine Nahfeld-Funkschnittstelle aufweist und zur Nahfeld-Kommunikation über eine Kommunikationsverbindung mit einem Lesegerät ausgebildet ist. Dabei handelt es sich vorzugsweise bei der Funkschnittstelle um einen RFID-Transponder.

Z.B. handelt es sich bei der erfindungsgemäßen elektronischen Gesundheitskarte um eine Chipkarte. Alternativ ist es auch wie oben erwähnt möglich, die als RFID-Chip ausgebildete elektronische Gesundheitskarte in Form von Klebefolien bzw. Dünnschichtfolien auszubilden, so dass es einem Patienten überlassen ist, auf welches Trägermedium er die elektronische Gesundheitskarte aufzubringen gedenkt.

Beschrieben ist ferner ein Lesegerät, wobei das Lesegerät eine Nahfeld-Funkschnittstelle aufweist und zur Nahfeldkommunikation über eine Kommunikationsverbindung mit einer elektronischen Gesundheitskarte ausgebildet ist. Auch hier handelt es sich vorzugsweise bei der Funkschnittstelle um eine RFID-Sende-/Empfangseinheit.

Z.B. handelt es sich bei dem Lesegerät um einen Konnektor. Ein Konnektor ist dazu ausgebildet, um die Kommunikation zwischen elektronischer Gesundheitskarte, Arzt- oder Apotheken-Informationssystem und Telematik-Infrastruktur, wie z. B. einem Rezept-Server herzustellen.

Im Folgenden werden Ausführungsformen der Erfindung anhand der Zeichnungen näher erläutert. Es zeigen:
- Fig. 1:: ein Blockdiagramm eines Datenverarbeitungssystems zur kontaktlosen Kommunikation zwischen einer elektronischen Gesundheitskarte und einem Lesegerät.;
- Fig. 2:: ein Flussdiagramm verschiedener Beispiele von Kommunikationsverfahren zwischen einer elektronischen Gesundheitskarte und einem Lesegerät;
- Fig. 3:: ein weiteres Flussdiagramm zur Authentifizierung eines Benutzers einer elektronischen Gesundheitskarte gegenüber der elektronischen Gesundheitskarte selbst;
- Fig. 4:: ein Flussdiagramm eines Anmeldeverfahrens einer elektronischen Gesundheitskarte an einem Lesegerät;
- Fig. 5:: ein weiteres Flussdiagramm zur Authentifizierung eines Benutzers einer elektronischen Gesundheitskarte gegenüber der elektronischen Gesundheitskarte selbst.

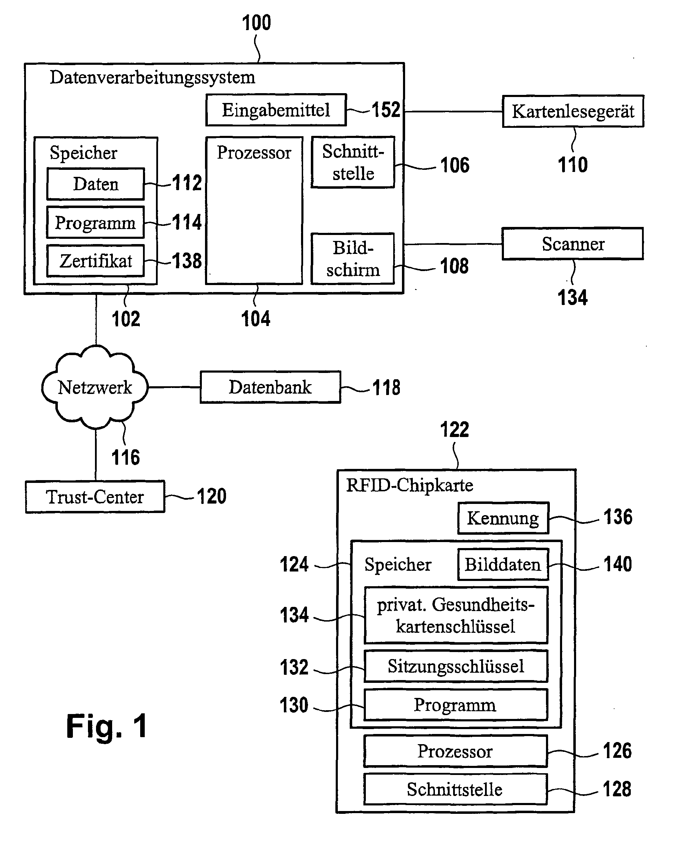

Die Fig. 1 zeigt ein Blockdiagramm eines Datenverarbeitungssystems 100 zur kontaktlosen Kommunikation zwischen einer elektronischen Gesundheitskarte 122 und einem Lesegerät 110. Dabei ist das Lesegerät 110 an das Datenverarbeitungssystem 100 angekoppelt. Beispielsweise kommuniziert das Datenverarbeitungssystem 100 über seine Schnittstelle 106 mit dem Kartenlesegerät 110. Das Kartenlesegerät 110 kann alternativ über einenso genannten Konnektor an das Datenverarbeitungssystem 100 angeschlossen werden. In diesem Fall ist der sog. Konnektor üblicherweise über das Netzwerk 116 mit dem Datenverarbeitungssystem 100 verbunden. Teile des Datenverarbeitungssystems 100 können auch in dem Lesegerät 110 integriert sein, oder das Lesegerät kann Bestandteil des Datenverarbeitungssystems selbst sein.

Das Datenverarbeitungssystem 100 weist Eingabemittel 152, wie z. B. eine Tastatur, eine Maus usw. auf. Des weiteren umfasst das Datenverarbeitungssystem 100 einen Speicher 102 und einen Prozessor 104. Im Speicher 102 befinden sich beliebige Daten 112, sowie Programmodule 114.

Der Prozessor 104 dient zur Ausführung der Programm-Module 114. Des weiteren umfasst das Datenverarbeitungssystem 100 Ausgabemittel in Form beispielsweise eines Bildschirms 108.

Das Datenverarbeitungssystem 100 ist des weiteren über ein Netzwerk 116, wie z. B. das Internet, mit einer externen Datenbank 118 sowie einem Trust-Sender 120 verbunden. Die Datenbank 118 ist z. B. ein zentraler Rezeptdaten-Server. Alternativ kann die Datenbank 118 auch eine Patientenakten-Datenbank umfassen, wenn das Datenverarbeitungssystem 100 Teil eines Arzt-Informationssystems, beispielsweise in einem Krankenhaus ist.

Das Kartenlesegerät 110 kommuniziert drahtlos mit der RFID-Chipkarte 122, welche als elektronische Gesundheitskarte ausgebildet ist. Zu diesem Zweck verfügt die Chipkarte 122 über eine Schnittstelle 128, z. B. in Form eines RFID-Transponders. Ferner verfügt die RFID-Chipkarte 122 über einen Prozessor 126 und einen speicher 124. In dem Speicher 124 sind unter anderem Programm-Module 130 enthalten, welche durch den Prozessor 126 ausgeführt werden können. Des weiteren weist der Speicher einen geschützten Speicherbereich auf, in welchem sich ein privater Gesundheitskartenschlüssel 134 und ein Sitzungsschlüssel 132 gespeichert befinden.

An das Datenverarbeitungssystem 100 ist außerdem noch einen optischer Scanner 134 angeschlossen, mittels welchem eine auf der RFID-Chipkarte 122 aufgedruckte Kennung 136, z.B. in Form eines Barcodes gescannt werden kann.

Im Folgenden sei die grobe Funktionsweise eines Kommunikationsverfahrens zwischen der elektronischen Gesundheitskarte 122 und dem Datenverarbeitungssystem 100 beziehungsweise dessen Lesegerät 110 skizziert. Es erfolgt nach Aktivierung des Transponders der RFID-Chipkarte 122 mittels Sendespulen des Lesegeräts 110 eine Authentifikation des Nutzers der elektronischen Gesundheitskarte gegenüber der elektronischen Gesundheitskarte selbst. Dies ist wie oben bereits erwähnt, hilfreich, um ein unbefugtes Benutzen der elektronischen Gesundheitskarte z. B. im Falle eines Diebstahls oder Verlustes zu verhindern. Hierzu wird beispielsweise ein sicherer Kommunikationskanal zwischen der RFID-Chipkarte 122 und dem Lesegerät 110 aufgebaut. Ein Benutzer der RFID-Chipkarte gibt mit Hilfe der Eingabemittel 152 eine Benutzerkennung am Datenverarbeitungssystem 100 ein. Diese Benutzerkennung wird daraufhin mit den öffentlichen Gesundheitskartenschlüssel der Gesundheitskarte in Form der RFID-Chipkarte 122 verschlüsselt. Der öffentliche Gesundheitskartenschlüssel kann dabei beispielsweise aus der Datenbank 118 über das Netzwerk 116 durch das Datenverarbeitungssystem 100 abgerufen werden. Alternativ ist es möglich, den öffentlichen Gesundheitskartenschlüssel aus dem Speicher 124 der Chipkarte 122 auszulesen.

Die Verschlüsselung der Benutzerkennung erfolgt mittels eines Verschlüsselungsalgorithmus, welcher z. B. in Form eines Programm-Moduls 114 implementiert ist. Im Falle des Einsatzes eines sog. Konnektors erfolgt die Verschlüsselung und Entschlüsselung im Konnektor. Nach Verschlüsselung wird die verschlüsselte Benutzerkennung durch das Lesegerät 110 an die Chipkarte 122 übertragen. Dort wird mit einem entsprechenden Entschlüsselungsprogramm, welches beispielsweise als Programm-Modul 130 implementiert sein kann, eine Entschlüsselung vorgenommen unter Verwendung des privaten Gesundheitskartenschlüssels 134. In diesem Fall bilden der private und öffentliche Gesundheitskartenschlüssel ein asymmetrisches kryptografisches Schlüsselpaar. Die RFID-Chipkarte 122 beziehungsweise das entsprechende Programm-Modul 130 wird eine weitere Kommunikation mit dem Lesegerät 110 nur dann freigeben, wenn die durch die Chipkarte entschlüsselte Benutzerkennung einer entsprechenden Benutzerkennung entspricht, welche auf der RFID-Chipkarte in einem nichtauslesbaren Speicherbereich abgelegt ist. So ist gewährleistet, dass ein unbefugter Zugriff auf die RFID-Chipkarte wirkungsvoll verhindert wird.

Anstatt der Verwendung beispielsweise einer PIN zur Benutzer-Identifikation ist es auch möglich, biometrische Merkmale mittels der Eingabemittel 152 aufzunehmen. In diesem Fall handelt es sich bei den Eingabemitteln 132 um einen biometrischen Scanner, wie z. B. einem Fingerabdruck-Scanner. Im Falle der Aufnahme zum Beispiel eines Fingerabdrucks wird dieser nach dem Scan digitalisiert, wie obig beschriebenen verschlüsselt und an die RFID-Chipkarte zur Verifizierung übertragen. Allerdings findet hier vorzugsweise wie ebenfalls obig beschrieben eine Reduktion der zu übertragenden Biometriedaten statt, da typischerweise die Speicher- und Prozessorkapazität einer RFID-Chipkarte begrenzt ist.

Erfindungsgemäß kann eine Kommunikation zwischen Datenverarbeitungssystem 100 und Chipkarte 122 auch in einer alternativen Art und Weise erfolgen: Hierzu ist beispielsweise auf der RFID-Chipkarte 122 eine Kennung 136 aufgedruckt. Mittels des optischen Scanners 134 wird nun das Datenverarbeitungssystem 100 die Kennung 136 erfassen. Beispielsweise handelt es sich bei der Kennung 136 um einen zweidimensionalen Barcode, so dass hier eine hohe Informationsdichte gewährleistet ist. Zum Zwecke des Scannens führt nun ein Besitzer der Chipkarte 122 diese mit der Kennung zum Scanner 134. Aus der gescannten Kennung 136 generiert nun ein Programm-Modul 114 unter Verwendung entsprechender Algorithmen einen Sitzungsschlüssel. Dieser Sitzungsschlüssel kann entweder die Kennung 136 selbst sein, wobei es sich in diesem Fall anbietet, als Kennung 136 den öffentlichen Gesundheitskartenschlüssel der RFID-Chipkarte 122 zu verwenden. In diesem Fall ist eine Kommunikation zum Abruf des öffentlichen Gesundheitskartenschlüssels über das Netzwerk 116 mit der Datenbank 118 bzw. durch die Luftschnittstelle mit der Chipkarte 122 nicht notwendig.

Unter Verwendung eines Challenge-Response-Verfahrens können nun das Datenverarbeitungssystem 100 und die RFID-Chipkarte 122 mittels des Sitzungsschlüssels eine Authentifizierungsprüfung durchführen. Anschaulich bedeutet dies zum Beispiel, dass die elektronische Gesundheitskarte eine Zufallskennung, z. B. eine Zufallszahl, erzeugt. Die Zufallskennung wird im Klartext an das Datenverarbeitungssystem 100 übermittelt. Daraufhin verschlüsselt das Datenverarbeitungssystem diese Zufallskennung mit dem zuvor unter Verwendung der Kennung 136 erzeugten Sitzungsschlüssels. Vorzugsweise geht in die Erzeugung des Sitzungsschlüssels ferner noch ein Autorisierungsschlüssel ein, welcher beispielsweise mittels des Kartenlesegeräts 110 von einem Heilberufsausweis empfangen wurde. Bevorzugterweise wird jedoch die gescannte Kennung an den Heilberufsausweis gesendet, welcher nun in der Lage ist, unter Verwendung des Autorisierungsschlüssels den Sitzungsschlüssel zu erzeugen.

Nach Verschlüsselung der empfangenen Zufallszahl mit dem Sitzungsschlüssel wird die verschlüsselte Zufallszahl an die RFID-Chipkarte 122 zurückübermittelt. Da auch die RFID-Chipkarte 122 in deren Speicher 124 den Sitzungsschlüssel 132 gespeichert hat, kann nun die RFID-Chipkarte die empfangene verschlüsselte Zufallszahl wiederum entschlüsseln. Gelingt dies, ist verifiziert, dass das Datenverarbeitungssystem 100 zuvor die Kennung 136 zur Erzeugung des Sitzungsschlüssels 132 gescannt hat. Damit ist klar, dass eine Kommunikation zwischen Chipkarte 122 und Datenverarbeitungssystem 100 mit Willen des Besitzers der Chipkarte 122 zustande gekommen ist, da dieser selbst die Chipkarte zum Scannen der Kennung 136 bereitgestellt hat.

Es sei hier darauf hingewiesen, dass es sich bei dem Sitzungsschlüssel 132 nicht notwendigerweise um einen symmetrischen Schlüssel handeln muss. Hier können auch asymmetrische kryptografische Schlüsselpaare zum Einsatz kommen.

Erfindungsgemäß bildet eine weitere Sicherheitsstufe für eine Kommunikation zwischen dem Datenverarbeitungssystem 100 und der RFID-Chipkarte die Verwendung von Zertifikaten. Beispielsweise enthält das Datenverarbeitungssystem 100 ein Zertifikat 138, welches das Datenverarbeitungssystem als vertrauenswürdig auszeichnet. In der Regel liegt das Zertifikat im Kartenleser, da auch dieser eine kryptografische Identität besitzt. Bei Verwendung eines Konnektors hat dieser in jedem Fall ein Zertifikat. Beispielsweise wird für eine Kommunikation zwischen dem Datenverarbeitungssystem 100 und der Chipkarte 122 das Zertifikat 138 vom Datenverarbeitungssystem 100 an die Chipkarte 122 übertragen. Mittels des Programm-Moduls 130 erfolgt nun eine Überprüfung des Zertifikats 138. Dies kann entweder durch Kommunikation mit dem Trust-Center 120 erfolgen, oder aber unter Verwendung entsprechender Root-Schlüssel und Zertifikate, welche selbst im Speicher 134 in einem nicht auslesbaren und gesicherten Speicherbereich abgelegt sind. Nach erfolgreichem Überprüfen und Bestätigen des Zertifikats 138 erfolgt eine weitere Kommunikation zwischen dem Datenverarbeitungssystem 100 und der Chipkarte 122. Wie ebenfalls oben erwähnt, kann beispielsweise das Zertifikat bestimmte Zugriffsberechtigungen auf Daten, welche im Speicher 124 abgelegt sind, enthatten.

Dies umfasst beispielsweise eine weitere Sicherheitsstufe, indem nach erfolgreicher Zertifikatsüberprüfung Bilddaten 140 von der Chipkarte 122 an das Datenverarbeitungssystem 100 übertragen werden. Diese Bilddaten enthalten zum Beispiel ein Gesichtsbild des Eigentümers der Chipkarte 122. Nach Empfang der Bilddaten 140 durch das Datenverarbeitungssystem 100 werden die Bilddaten am Bildschirm 108 visualisiert. Dies ermöglicht einem Betrachter des Bildschirms 108, z. B. einem Apotheker oder einem Arzt eine Sichtprüfung, ob der Besitzer der RFID-Chipkarte 122 auch tatsächlich deren Eigentümer entspricht.

In einer noch weiteren Sicherheitsstufe gibt es alternativ auch die Möglichkeit, nach erfolgreicher Zertifikatsüberprüfung eine entsprechende Kennung an das Datenverarbeitungssystem 100 zu übertragen. Dies erfordert innerhalb des Datenverarbeitungssystems 100 eine hohe Absicherung, so dass ein unbefugtes Ausspähen oder Auslesen der übertragenen Kennung durch Unbefugte verhindert wird. Nachdem diese Kennung an das Datenverarbeitungssystem 100 übertragen wurde, kann nun mittels der Eingabemittel 152 am Datenverarbeitungssystem eine Benutzerkennung eingegeben werden. Dies kann beispielsweise wiederum in Form einer PIN oder auch eines Fingerabdruck-Scans oder allgemein eigenes Scans eines biometrischen Merkmals erfolgen. Stimmt die an das Datenverarbeitungssystem übertragene Kennung mit der eingegebenen Benutzerkennung überein, so weiß das Datenverarbeitungssystem 100, dass der Benutzer der RFID-Chipkarte auch deren Eigentümer ist. Diese Funktionalität kann auch in dem sog. Konnektor, an dem der PC z.B. des Apothekers angeschlossen ist, realisiert sein.

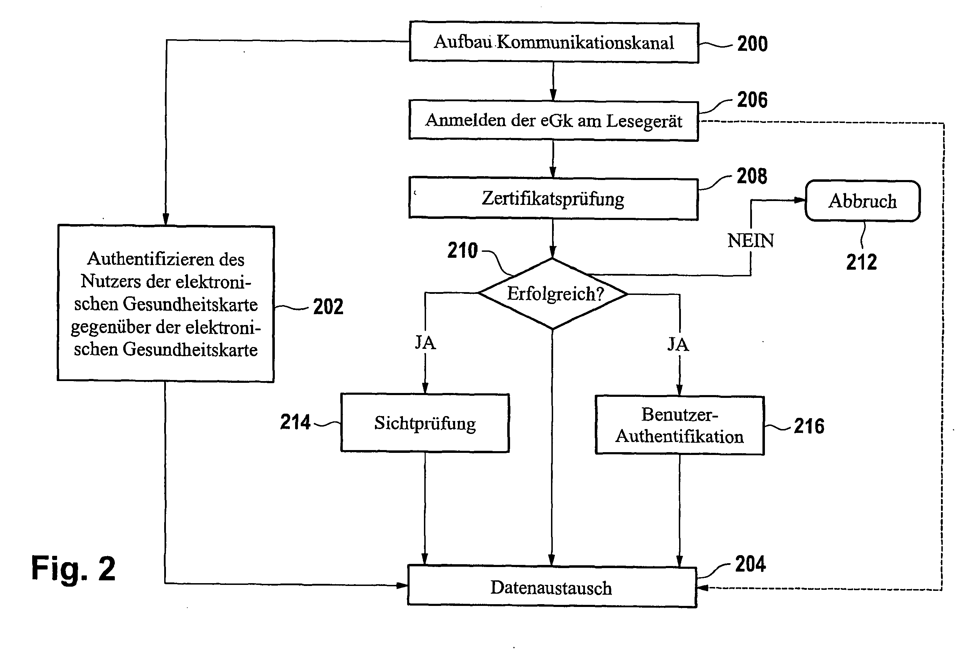

Die Fig. 2 zeigt ein Flussdiagramm verschiedener Beispiele von Kommunikationsverfahren zwischen einer elektronischen Gesundheitskarte und einem Lesegerät. Nach dem Aufbau eines Kommunikationskanals in Schritt 200 zwischen der Gesundheitskarte und dem Lesegerät gibt es verschiedene Prüfschritte, mit welchen verifiziert wird, dass zum einen das Lesegerät für einen Zugriff auf die Gesundheitskarte autorisiert ist und zum anderen der Träger der Gesundheitskarte auch zu deren Benutzung berechtigt ist.

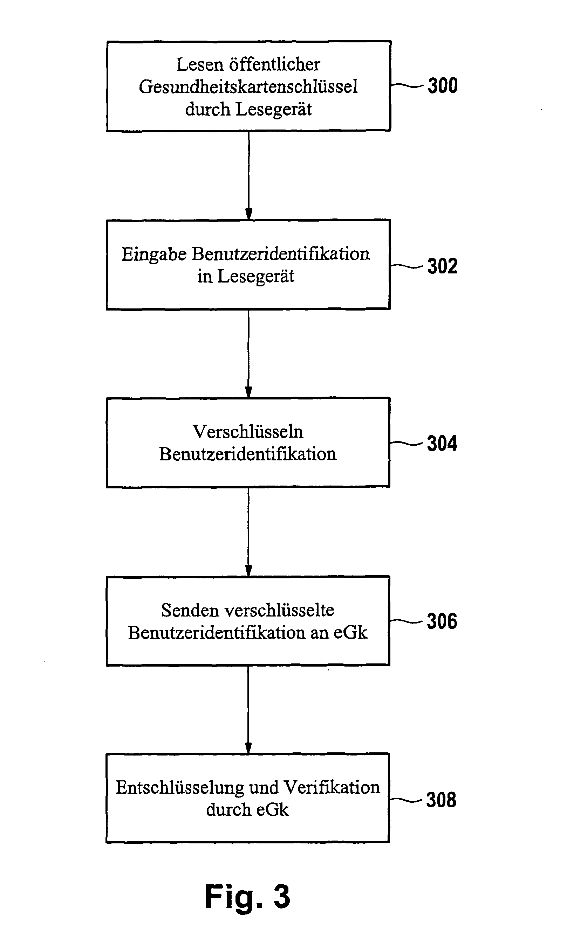

In einer ersten Alternative erfolgt nach Schritt 200 der Schritt 202 mit dem Authentifizieren des Nutzers der elektronischen Gesundheitskarte gegenüber der elektronischen Gesundheitskarte selbst. Dieses Authentifizieren des Schritts 202 umfasst die Eingabe einer Benutzer-Identifikation am Lesegerät, das Verschlüsseln dieser Benutzer-Identifikation und das Senden der verschlüsselten Benutzer-Identifikation an die Gesundheitskarte, wo eine Verifikation der Benutzer-Identifikation stattfindet. Nach erfolgreicher Authentifizierung erfolgt schließlich im Schritt 204 der Datenaustausch zwischen den Lesegerät und der Gesundheitskarte. Weitere Details bezüglich des Schrittes 202 sind in der Fig. 3 erläutert.

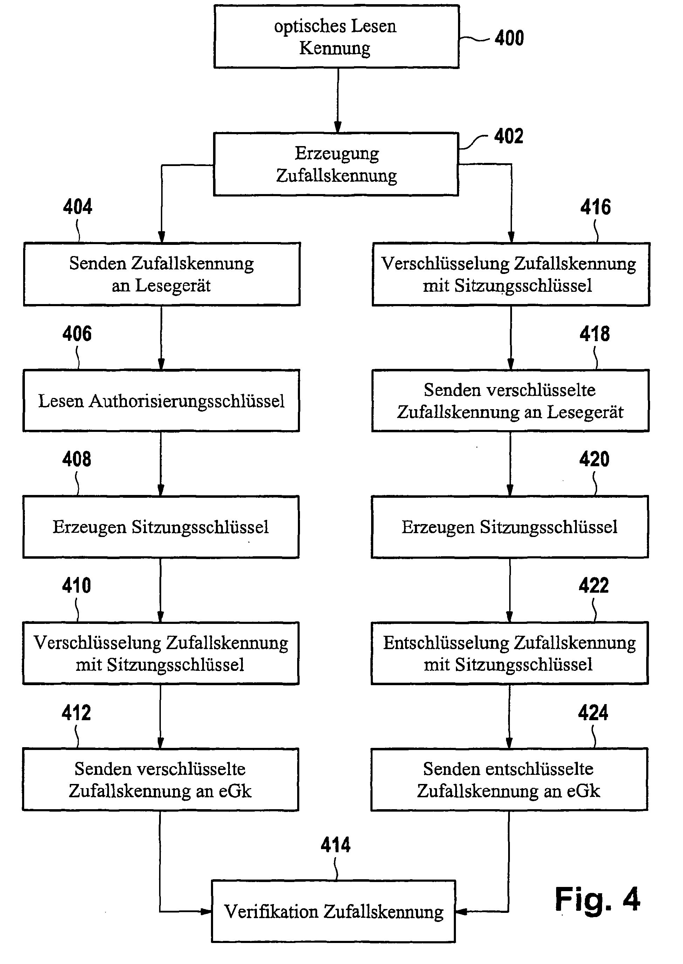

Eine Alternative zur Durchführung des Schrittes 202 in der Figur 2 bietet sich in der Durchführung des Schritts 206, des Schritts 206, dem Anmelden der elektronischen Gesundheitskarte am Lesegerät. Dieses Anmelden kann beispielsweise unter Verwendung einer optisch lesbaren Kennung erfolgen, welche auf der elektronischen Gesundheitskarte aufgedruckt ist. Diese aufgedruckte optische Kennung kann vom Lesegerät gelesen werden und als Basis für einen Schlüssel für ein Challenge-Response-Verfahren zwischen der Gesundheitskarte und dem Lesegerät verwendet werden. Da dies das aktive Beteiligen des Nutzers der elektronischen Gesundheitskarte fordert, ist sichergestellt, dass ein unbemerkter drahtloser Funkzugriff auf die Gesundheitskarte ausgeschlossen ist, da in diesem Fall aufgrund der dem Lesegerät unbekannten optisch lesbaren Kennung das Challenge-Response-Verfahren fehlschlagen würde. Weitere Details zur Durchführung des Schrittes 206 finden sich in der Fig. 4.

Nach erfolgreicher Durchführung des Schrittes 206 bietet sich die Möglichkeit, direkt mit Schritt 204, dem Datenaustausch zwischen Gesundheitskarte und Lesegerät fortzufahren. Dies könnte beispielsweise dann sinnvoll sein, wenn ein Träger der Gesundheitskarte aufgrund der gegebenen Umstände davon ausgehen kann, dass mit höchster Wahrscheinlichkeit das Lesegerät ein vertrauenswürdiges Lesegerät ist. Dies wird zum Beispiel innerhalb einer Apotheke oder einer Arztpraxis der Fall sein. Ein Patient wird hier unter normalen Umständen nicht die Vertrauenswürdigkeit eines entsprechenden Lesegeräts in Frage stellen, so dass hierfür weitere Authentifizierungsüberprüfungen bezüglich der Zugriffsberechtigung des Lesegeräts auf die Gesundheitskarte unnötig sind.

In einer weiteren Alternative gibt es entweder nach Durchführung des Schrittes 206 mit den Anmelden der Gesundheitskarte am Lesegerät oder direkt nach Schritt 200 ohne Verwendung des Schrittes 206 die Möglichkeit einer Zertifikatsüberprüfung in Schritt 208. Bei dieser Zertifikatsüberprüfung handelt es sich um eine Überprüfung des Zertifikates des Lesegeräts, so dass in einem automatischen Prüfverfahren ohne jedwede Interaktion des Trägers der Gesundheitskarte durch die Gesundheitskarte selbst festgestellt werden kann, ob das zugreifende Lesegerät vertrauenswürdig ist und ob demzufolge ein weiterer Zugriff des Lesegeräts auf die Gesundheitskarte erlaubt werden soll. Die Zertifikatsüberprüfung in Schritt 208 umfasst dabei die Schritte des Empfangs eines digitalen Zertifikats des Lesegeräts durch die elektronische Gesundheitskarte und der Überprüfung des Zertifikats durch elektronische Gesundheitskarte. Vorzugsweise kommt hier als Zertifikat ein so genanntes "Card-Verifiable-Certificate (CVC)" zur Anwendung. Zur Prüfung der Signatur eines CVCs muss ein in der Gesundheitskarte eingetragener öffentlicher Schlüssel einer Zertifizierungsinstanz benutzt werden. Alternativ bietet sich jedoch auch die Möglichkeit, dass die Gesundheitskarte über das Lesegerät auf einen Trust-Center zugreift, um unter Verwendung dessen eine Zertifikatsüberprüfung durchzuführen.

Ist die Zertifikatsüberprüfung in Schritt 210 erfolgreich, erfolgt eine Freigabe der Übertragung von Daten von der elektronischen Gesundheitskarte an das Lesegerät. Dabei sind die zur Übertragung vorgesehenen Daten durch die im Zertifikat spezifizierten Zugriffsberechtigungen bestimmt. Beispielsweise kann nach erfolgreicher Zertifikatüberprüfung in Schritt 210 eine Sichtprüfung in Schritt 214 erfolgen. Die Sichtprüfung im Schritt 214 erfordert, dass ein Gesichtsbild des Inhabers der Gesundheitskarte in der Gesundheitskarte selbst in Form von Bilddaten gespeichert ist. Im Falle dessen, dass das Zertifikat eine Zugriffsberechtigung auf Bilddaten des Inhabers der Gesundheitskarte aufweist, werden in Schnitt 214 die in der Gesundheitskarte gespeicherten Bilddaten von der Gesundheitskarte an das Lesegerät gesendet. Daraufhin wird das in den Bilddaten enthaltene Bild visuell am Lesegerät oder an einem an dem Lesegerät angeschlossenen Datenverarbeitungssystem angezeigt. Dies ermöglicht einem Gesundheitsdienstleister visuell zu erkennen und zu entscheiden, ob der gegenwärtige Besitzer der Gesundheitskarte auch deren rechtmäßiger Eigentümer ist. Ist dies der Fall, kann nach Schritt 214 ein Datenaustausch mit Schritt 204 stattfinden.

Alternativ zur Durchführung der Sicht der Sichtprüfung in Schritt 214 kann nach erfolgreicher Zertifikatsüberprüfung in Schritt 210 auch eine Benutzer-Authentifikation mit Schritt 216 durchgeführt werden. In diesem Fall enthält das Zertifikat eine Zugriffsberechtigung zum Lesen einer Benutzer-Identifikation von der Gesundheitskarte. Diese Benutzer-Identifikation der Gesundheitskarte kann daraufhin mit einer Benutzereingabe am Lesegerät verglichen werden, womit das Lesegerät dazu in der Lage ist zu entscheiden, ob der gegenwärtige Benutzer der Gesundheitskarte auch zu deren Benutzung autorisiert ist. Nach erfolgreicher Benutzer-Authentisierung in Schritt 216 erfolgt wiederum in Schritt 204 der Datenaustausch zwischen Gesundheitskarte und Lesegerät.

Ist die Zertifikatsüberprüfung Schritts 210 nicht erfolgreich, erfolgt seitens der Gesundheitskarte ein Abbruch der Kommunikation zwischen Lesegerät und Gesundheitskarte. Da dieser Abbruch in Schritt 212 aufgrund der automatischen Zertifikatsüberprüfung ebenfalls vollautomatisch erfolgt, ist gewährleistet, dass im Falle des Durchführens der Schritte 200 und daraufhin folgend 208 ein "zufälliges Ausprobieren" von verschiedenen Kennungen zur Authentifizierung eines unbefugten Benutzers gegenüber der Gesundheitskarte effektiv verhindert werden kann.

Eine weitere Sicherheitsstufe kann ferner dadurch erhalten werden, indem zum Beispiel die nach Überprüfung eines Zertifikat ein interner Countdown in Gang gesetzt werden kann, nach dessen Ablauf erst eine weitere Zertifikatüberprüfung stattfinden kann. So kann zum Beispiel die Gesundheitskarte dafür konfiguriert werden, nur alle 5 Sekunden eine Zertifikatsprüfung durchzuführen. Damit wird verhindert, dass unter Verwendung zum Beispiel von Brute-Force-Methoden Zertifikate "ausprobiert" und "erraten" werden. Diese Sperre von zum Beispiel 5 Sekunden wird im normalen Betrieb den Einsatz der Gesundheitskarte nicht beeinflussen, da hier davon ausgegangen werden muss, dass korrekt zertifizierte Lesegeräte vorliegen. In diesem Fall ist also eine wiederholte Zertifikatsüberprüfung überhaupt nicht notwendig.

Die Fig. 3 zeigt ein weiteres Flussdiagramm zur Authentifizierung eines Benutzers einer elektronischen Gesundheitskarte gegenüber der elektronischen Gesundheitskarte selbst. Die Schritte 300 bis 308 der Fig. 3 entsprechen dabei wie bereits erwähnt, dem Schritt 202 in der Fig. 2, nämlich dem Authentifizieren des Nutzers der elektronischen Gesundheitskarte gegenüber der elektronischen Gesundheitskarte selbst. In Schritt 300 erfolgt das Lesen des öffentlichen Gesundheitskartenschlüssels der Gesundheitskarte durch das Lesegerät. Der öffentliche Gesundheitskartenschlüssel kann dabei entweder durch ein optisches Verfahren von der Oberfläche der Gesundheitskarte abgescannt und gelesen werden, er kann über Nahfeld-Funkübermittlung von der Gesundheitskarte ans Lesegerät übermittelt werden oder das Lesegerät kann den öffentlichen Gesundheitskartenschlüssel von einer externen Datenbank abfragen. Nach Durchführung des Schritts 300 wird der Benutzer am Lesegerät, beziehungsweise an dem Datenverarbeitungssystem, welches an ein Lesegerät angeschlossen ist, dazu aufgefordert, einige Benutzer-Identifikation für die elektronische Gesundheitskarte einzugeben. Diese Benutzer-Identifikation kann ein biometrisches Merkmal sein, sie kann eine PIN sein oder eine beliebige alphanumerische Zeichen-Buchstaben-Kombination.

Nach Eingabe der Benutzer-Identifikation in Schritt 302 wird die Benutzer-Identifikation in Schritt 34 mit dem öffentlichen Gesundheitskartenschlüssel durch das Lesegerät verschlüsselt. In Schritt 306 wird die verschlüsselte Benutzer-Identifikation an die elektronische Gesundheitskarte gesendet, welche diese in Schritt 308 entschlüsselt. Die Entschlüsselung erfolgt dabei mit dem privaten Gesundheitskartenschlüssel der Gesundheitskarte. Dies erfordert, dass der öffentliche und private Gesundheitskartenschlüssel der Gesundheitskarte ein asymmetrisches kryptografisches Schlüsselpaar bilden.

Es sei hier noch angemerkt, dass anstatt der Verwendung des öffentlichen und privaten Gesundheitskartenschlüssels zur verschlüsselten Kommunikation zwischen dem Lesegerät und der Gesundheitskarte auch beliebige andere sichere kryptografische Verfahren zur gesicherten Datenübertragung Verwendung finden können. Entscheidend ist, dass ein vertrauenswürdiger Kanal "Trusted Channel" zwischen der Gesundheitskarte und dem Lesegerät hergestellt wird.

Die Fig. 4 zeigt ein Flussdiagramm des Anmeldeverfahrens einer elektronischen Gesundheitskarte an einem Lesegerät. Dieses Anmeldeverfahren wird wie bereits oben erwähnt, unter Verwendung einer optisch lesbaren Kennung durchgeführt, welche auf der elektronischen Gesundheitskarte aufgedruckt ist. Die Verfahrensschritte 400 bis 424, welche in der Fig. 4 veranschaulicht sind, entsprechen dabei im Verfahrensschritt 206 der Fig. 2.

In Schritt 400 erfolgt das Lesen der optischen Kennung durch das Lesegerät beziehungsweise durch einen entsprechenden Scanner, welcher mit dem Lesegerät verbunden ist. Wie bereits erwähnt, kann die Kennung in Form eines zweidimensionalen Strichcodes auf der Oberfläche der Gesundheitskarte aufgedruckt sein. Um hier die Fälschungssicherheit der elektronischen Gesundheitskarte weiter zu erhöhen, besteht auch die Möglichkeit, anstatt der Verwendung eines einfachen Schwarz-Weiß-Aufdruckes auf die Gesundheitskarte die Kennung unter Verwendung von speziellen pigmentierten Farbstoffen auf die Gesundheitskarte aufzubringen. Beispielsweise können fluoreszierende oder phosphoreszierende Farbstoffe zum Einsatz kommen. In diesem Fall kann die Kennung mit einer Lichtwellenlänge zum phosphoreszierenden Leuchten angeregt werden, wohingegen das Auslesen auf einer Lichtwellenlänge stattfindet, in deren Wellenlängenbereich die Kennung fluor- oder phosphoreszierendes Licht emittiert.

Nach dem Lesen der optischen Kennung in Schritt 400 erfolgt das Erzeugen einer Zufallskennung in Schritt 402. Diese Zufallskennung wird durch die elektronische Gesundheitskarte erzeugt. Nun bieten sich zwei unterschiedliche Möglichkeiten, wie das Verfahren fortgeführt werden kann. Die eine Möglichkeit bietet sich in der Durchführung der Schritte 404 bis 412 und darauffolgenden dem Schritt 414, die andere Möglichkeit bietet sich in der Durchführung der Schritte 416 bis 424 und darauffolgend der Durchführung des Schrittes 414.

Bei der Durchführung der Schritte 404 bis 412 wird die von der Gesundheitskarte in Schritt 402 erzeugte Zufallskennung an das Lesegerät gesendet. In Schritt 406 liest das Lesegerät einen speziellen Autorisierungsschlüssel, zum Beispiel einen Masterkey. Bei diesem Masterkey kann es sich z.B. um einen besonderen geheimen Schlüssel eines Heilberufsausweises handeln, womit sichergestellt ist, dass eine Anmeldung einer elektronischen Gesundheitskarte an einem Lesegerät nur dann erfolgreich sein kann, wenn das Lesegerät auch von einem autorisierten Benutzer, z.B. eines Arztes oder eines Apothekers, welcher im Besitz des Heilberufsausweises ist betrieben wird. Unter Verwendung des gelesenen Autorisierungsschlüssels, sowie der gelesenen Kennung, wird in Schritt 408 durch das Lesegerät ein Sitzungsschlüssel erzeugt. Daraufhin wird in Schritt 410 die Zufallskennung mit dem in Schritt 408 erzeugten Sitzungsschlüssel verschlüsselt und in Schritt 412 an die elektronische Gesundheitskarte übermittelt.

Da die elektronische Gesundheitskarte selbst über den Sitzungsschlüssel verfügt, welcher in einem gesicherten nichtauslesbaren Speicherbereich der Gesundheitskarte gespeichert ist, ist die Gesundheitskarte in Schritt 414 in der Lage, die Zufallskennung zu verifizieren, indem sie die verschlüsselte Zufallskennung wiederum entschlüsselt und den so erhaltenen Wert mit der zuvor erzeugten Zufallskennung vergleicht, welche an das Lesegerät übermittelt wurde. Die Verifikation ist erfolgreich, wenn die entschlüsselte Zufallskennung mit der erzeugten Zufallskennung übereinstimmt. Der Sitzungsschlüssel, welcher zur Verschlüsselung der Zufallskennung verwendet wird und ihr Sitzungsschlüssel, welcher in der Gesundheitskarte gespeichert ist müssen nicht notwendigerweise identisch sein. Dies ist nur dann notwendig, wenn ein symmetrischer Schlüssel zur Kryptographie verwendet wird. Im Falle eines asymmetrischen Schlüsselpaares sind der in Schritt 408 erzeugte Sitzungsschlüssel, sowie der in Schritt 414 zur Verifikation der Zufallskennung verwendete Schlüssel aufgrund deren Asymmetrie nicht identisch.

Alternativ zur Durchführung der Schritte 404 bis 412, sowie des Schritts 414 bietet sich wie obig erwähnt, auch die Durchführung der Schritte 416 bis 424, gefolgt von Schritt 414 an. Dies sei nun näher erläutert: Nachdem in Schritt 402 die Zufallskennung durch die Gesundheitskarte erzeugt wurde, wird in Schritt 416 diese Zufallskennung durch die Gesundheitskarte mit der in der Gesundheitskarte gespeicherten Sitzungsschlüssel verschlüsselt. Die verschlüsselte Zufallskennung wird daraufhin von der Gesundheitskarte in Schritt 418 an das Lesegerät übermittelt. In Schritt 420 erzeugt das Lesegerät selbst den Sitzungsschlüssel, wobei hier die optisch gelesene Kennung (Schritt 400) verwendet wird. Alternativ oder zusätzlich kann auch hier wiederum ein Autorisierungsschlüssel gelesen werden, welcher zusammen mit der gelesenen optischen Kennung zur Erzeugung des Sitzungsschlüssels in Schritt 420 dient. In Schritt 422 wird die verschlüsselte Zufallskennung mit dem Sitzungsschlüssel entschlüsselt und die entschlüsselte Zufallskennung wird daraufhin in Schritt 424 an die elektronische Gesundheitskarte zurückübermittelt. Nun kann in dem nachfolgenden Schritt 414 die Gesundheitskarte wiederum verifizieren, ob die empfangene Zufallskennung der in Schritt 402 erzeugten Zufallskennung entspricht, womit eine Verifikation gegeben ist.

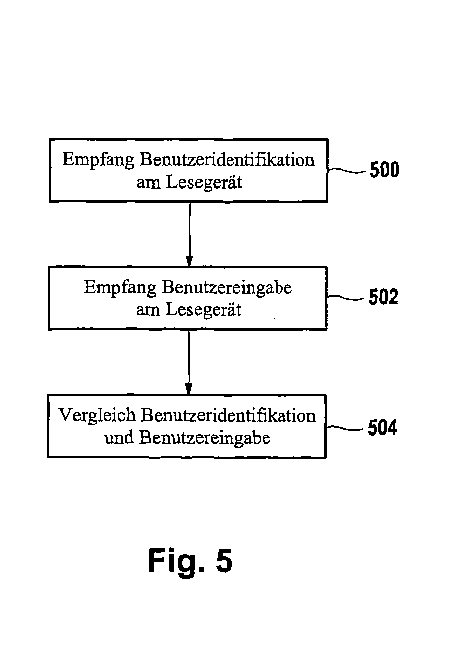

Die Fig. 5 zeigt ein weiteres Flussdiagramm zur Authentifizierung eines Benutzers einer elektronischen Gesundheitskarte gegenüber der elektronischen Gesundheitskarte selbst. Die Durchführung der Schritte 500 bis 504 entspricht dabei dem Schritt 216 der Fig. 2. Wie in der Fig. 2 erläutert, setzt die Durchführung der Schritte 500 bis 504 zunächst eine erfolgreiche Zertifikatsüberprüfung des Lesegeräts voraus. Der Grund liegt darin, dass die elektronische Gesundheitskarte in Schritt 500 an das Lesegerät eine Benutzer-Identifikation übermittelt. In anderen Worten bedeutet dies, dass hier ein eine eigentlich nur der Gesundheitskarte bekannte Information diese zum Zwecke einer Benutzer-Authentifikation verlässt. Dies erfordert zwingenderweise, dass eine Übermittlung einer solchen Benutzer-Identifikation nur an solche Lesegeräte erfolgt, von welchen sich der Benutzer der Gesundheitskarte bzw. die Gesundheitskarte selbst sicher sein kann, dass diese vertrauenswürdig sind. Im Gegenzug erfordert dies natürlich, dass eine Manipulation des Lesegeräts zuverlässig verhindert werden muss, so dass ein Auslesen der an das Lesegerät übertragenen Benutzer-Identifikation verhindert wird.

Nach Empfang Benutzer-Identifikation am Lesegerät in Schritt 500 erfolgt in Schritt 502 ein Empfang einer Benutzereingabe am Lesegerät. Diese Benutzereingabe kann beispielsweise eine PIN, eine alphanumerische Zeichenkombination oder auch ein biometrisches Merkmal sein. Beispielsweise erfolgt in Schritt 502 ein Fingerabdruck-Scan des Benutzers der elektronischen Gesundheitskarte. Daraufhin wird in Schritt 504 die Benutzereingabe, das heißt zum Beispiel der gescannte Fingerabdruck mit der Benutzer-Identifikation verglichen, welche in Schritt 500 von der Gesundheitskarte selbst empfangen wurde. Stimmen beim Beispiel eines Fingerabdrucks der Fingerabdruck, welcher von der Gesundheitskarte an das Lesegerät übermittelt wurde, sowie der Fingerabdruck welcher vom Lesegerät in Form der Benutzereingabe empfangen wurde, überein, kann sich das Lesegerät sicher sein, dass der gegenwärtige Benutzer der Gesundheitskarte auch deren rechtmäßiger Eigentümer ist.

Die Verwendung von biometrischen Merkmalen in Zusammenhang mit einer Benutzer-Authentifikation im Rahmen der elektronischen Gesundheitskarte ist in besonderer Weise vorteilhaft: Hier entfällt vollständig die Notwendigkeit, dass sich ein Benutzer, der Eigentümer der elektronischen Gesundheitskarte, beispielsweise eine PIN, wie bei vielen anderen elektronischen Karten der Fall, merken muss. Trotz des Nichterfordernisses einer PIN ist eine höchste Sicherheit bezüglich eines unbefugten Auslesens von Daten aus der Gesundheitskarte gewährleistet. Die Nichterfordernis einer PIN ist insbesondere vor dem Hintergrund der typischen Verwendung von elektronischen Gesundheitskarten relevant: Ältere Menschen, welche aufgrund deren Krankheitsanfälligkeit häufig eine Gesundheitskarte benutzen, werden von der Problematik ausgenommen, dass diese sich eine PIN merken müssen, was insbesondere im fortgeschrittenen Alter oft aufgrund erhöhter Vergesslichkeit zu erheblichen Schwierigkeiten führt. Auch in Familien mit Kindern, wo üblicherweise jeder einzelne Krankenversicherte eine eigene Versichertenkarte, das heißt eine eigene elektronische Gesundheitskarte besitzt, entfällt die Notwendigkeit, dass beispielsweise eine erziehende Mutter für sich und deren Kinder mehrere verschiedene PINs merken muss. Hier ist durch die Verwendung von persönlichen, individuellen biometrischen Merkmalen eine flexible und hochsichere Verwendung der elektronischen Gesundheitskarte möglich.

Es sei hier noch angemerkt, dass verschiedene erwähnte Sicherheitsmechanismen zum Zwecke eines flexiblen Einsatzes der elektronischen Gesundheitskarte miteinander kombiniert werden können. Beispielsweise ist es denkbar, die Eingabe einer PIN wie beispielsweise in der Fig. 2, Schritt 202 beschrieben, in Verbindung mit einer Sichtprüfung, Schritt 214 zu kombinieren. Das heißt, zur Kommunikation zwischen der elektronischen Gesundheitskarte und dem Lesegerät kommt entweder der Schritt 202 zum Einsatz, oder die Schritte 208, 210 und 214. Kommt der Schritt 202 zum Einsatz, das heißt die einfache PIN-Eingabe zum Authentifizieren eines Benutzers der Gesundheitskarte gegenüber der Gesundheitskarte selbst, so kann die Gesundheitskarte auch beispielsweise an Betreuungspersonen gegeben werden, welche mit Kenntnis der PIN, sowie mit Besitz der Gesundheitskarte in eine Apotheke gehen können, um für den Betreuten ein elektronisches Rezept einzulösen. Wird die Sichtprüfung mit der Authentifikation des Nutzers über eine Kennung, z. B. einer PIN kombiniert, würde in einer Apotheke zunächst ein Bild des Eigentümers der Gesundheitskarte auf einem Bildschirm des Apotheken-Informationssystems erscheinen. Der Apotheker erkennt daraufhin, dass das von der Gesundheitskarte übermittelte Gesichtsbild nicht mit dem Aussehen des aktuellen Verwenders der Gesundheitskarte übereinstimmt. Daraufhin kann ein Apothekenbediensteter den Benutzer der Gesundheitskarte zur alternativen Eingabe einer PIN auffordern, um sich gegenüber der Gesundheitskarte und gegebenenfalls auch dem Lesegerät zu authentifizieren.

### Bezugszeichenliste

- 100: Datenverarbeitungssystem
- 102: Speicher
- 104: Prozessor
- 106: Schnittstelle
- 108: Bildschirm
- 110: Lesegerät
- 112: Daten
- 114: Programm
- 116: Netzwerk
- 118: Datenbank
- 120: Trust-Center
- 122: Chipkarte
- 124: Speicher
- 126: Prozessor
- 128: Schnittstelle
- 130: Programm
- 132: Sitzungsschlüssel
- 134: privater Gesundheitskartenschlüssel
- 136: Kennung
- 138: Zertifikat
- 140: Bilddaten
- 152: Eingabemittel

## Patentansprüche

1. Kommunikationsverfahren einer elektronischen Gesundheitskarte (122) mit einem Lesegerät, wobei zwischen der elektronischen Gesundheitskarte (122) und dem Lesegerät (110) eine Kommunikationsverbindung aufgebaut wird, wobei es sich bei der Kommunikationsverbindung um eine Nahfeldverbindung handelt, wobei das Kommunikationsverfahren ferner den Schritt umfasst des Anmeldens der elektronischen Gesundheitskarte (122) an dem Lesegerät, wobei beim Anmelden die folgenden Schritte ausgeführt werden:
- optisches Lesen einer Kennung (136) von der elektronischen Gesundheitskarte (122) durch das Lesegerät, wobei die Kennung fluoreszierende oder phosphoreszierende Farbstoffe umfasst, und wobei die Kennung mit einer Lichtwellenlänge zum phosphoreszierenden Leuchten angeregt wird, und wobei das Lesen auf einer Lichtleinwellenlänge stattfindet, in deren Wellenlängenbereich die Kennung fluoreszierendes oder phosphoreszierendes Licht emittiert,
- Durchführung eines Challenge-Response Verfahrens zwischen der elektronischen Gesundheitskarte (122) und dem Lesegerät, wobei für eine Verschlüsselung beim Challenge-Response Verfahren eine Verschlüsselung unter Verwendung der Kennung erfolgt, wobei das Challenge-Response Verfahren ferner die folgenden Schritte umfasst:
• Empfang eines Autorisierungsschlüssels eines Heilberufsausweises am Lesegerät (110),
• Erzeugung eines Sitzungsschlüssels (132) anhand der Kennung und des Autorisierungsschlüssels am Lesegerät,
• Durchführung des Challenge-Response Verfahrens unter Verwendung des Sitzungsschlüssels (132), wobei der Sitzungsschlüssel ferner auf einem gesicherten Speicherbereich der elektronischen Gesundheitskarte (122) gespeichert ist,
- Nach erfolgreichem Challenge-Response Verfahren Authentifizieren des Lesegeräts gegenüber der elektronischen Gesundheitskarte (122),
wobei das Authentifizieren die folgenden Schritte umfasst:
• Empfang eines digitalen Zertifikats (138) durch die elektronische Gesundheitskarte (122) von dem Lesegerät,
• Überprüfung des Zertifikats durch die elektronische Gesundheitskarte (122), wobei das Lesegerät (110) Authentifiziert ist, wenn die Zertifikatsüberprüfung erfolgreich ist,
• nach erfolgreicher Zertifikatsüberprüfung, Freigabe der Übertragung der Daten von der elektronischen Gesundheitskarte (122) an das Lesegerät, wobei die zur Übertragung vorgesehenen Daten durch die im Zertifikat spezifizierten Zugriffsberechtigungen bestimmt sind, wobei die Daten auf der Gesundheitskarte (122) gespeichert sind,
- wobei nach erfolgreicher Zertifikatsüberprüfung in der Gesundheitskarte (122) gespeicherte Bilddaten (140) von der Gesundheitskarte (122) an das Lesegerät (110) gesendet werden, wobei die Bilddaten zumindest ein Gesichtsbild des Inhabers der Gesundheitskarte (122) aufweisen, und
- das in den Bilddaten enthaltene Bild visuell am Lesegerät (110) oder an einem an dem Lesegerät (110) angeschlossenen Datenverarbeitungssystem angezeigt wird, um eine Sichtprüfung zu ermöglichen,
wobei es sich bei der Kennung um einen öffentlichen Gesundheitskartenschlüssel handelt, wobei ferner in der elektronischen Gesundheitskarte (122) ein privater Gesundheitskartenschlüssel elektronisch gespeichert ist, wobei der öffentliche und der private Gesundheitskartenschlüssel ein asymmetrisches kryptografisches Schlüsselpaar bilden.

2. Computerprogrammprodukt (114; 130) mit von einem Prozessor ausführbaren Instruktionen zur Durchführung der Verfahrensschritte gemäß Anspruch 1.

## Claims

1. A communication method of an electronic health insurance card (122) with a reading device, wherein a communications connection is established between the electronic health insurance card (122) and the reading device (110), wherein the communications connection is a near-field connection, wherein the communication method further comprises the step of registering the electronic health insurance card (122) with the reading device, wherein during registration the following steps are carried out:
- optical reading of an identifier (136) of the electronic health insurance card (122) by the reading device, wherein the identifier comprises fluorescent or phosphorescent dyes, and wherein the identifier is excited with a light wavelength so as to exhibit phosphorescence, and wherein the reading is carried out at a light wavelength in the wavelength range of which the identifier emits fluorescent or phosphorescent light,
- carrying out a challenge-response method between the electronic health insurance card (122) and the reading device, wherein an encryption using the identifier is carried out for encryption during the challenge-response method, wherein the challenge-response method further comprises the following steps:
• receiving an authorization key of a healthcare profession identification card at the reading device (110),
• generating a session key (132) based on the identifier and the authorization key at the reading device,
• carrying out the challenge-response method using the session key (132), wherein the session key is further stored on a secure storage area of the electronic health insurance card (122),
- after a successful challenge-response method, authenticating of the reading device with respect to the electronic health insurance card (122),
wherein the authenticating comprises the following steps:
• receiving a digital certificate (138) by the electronic health insurance card (122) from the reading device,
• reviewing the certificate by the electronic health insurance card (122), wherein the reading device (110) is authenticated if the certificate review is successful,
• after a successful certificate review, releasing the transmission of the data from the electronic health insurance card (122) to the reading device, wherein the data intended for transmission is determined by the access authorizations specified in the certificate, wherein the data is stored on the health insurance card (122),
- wherein after a successful certificate review, image data (140) stored in the health insurance card (122) is transmitted from the health insurance card (122) to the reading device (110), wherein the image data comprises at least one facial image of the owner of the health insurance card (122), and
- the image contained in the image data is visually displayed on the reading device (110) or on a data processing system connected to the reading device (110) so as to allow a visual inspection,
wherein the identifier is a public health insurance card key, wherein furthermore a private health insurance card key is electronically stored in the electronic health insurance card (122), wherein the public and private health insurance card keys form an asymmetrical cryptographic key pair.

2. A computer program product (114; 130), comprising instructions that can be executed by a processor for carrying out the method steps according to claim 1.

## Revendications

1. Procédé de communication d'une carte électronique d'assurance-maladie (122) avec un appareil de lecture, dans lequel une liaison de communication est établie entre la carte électronique d'assurance-maladie (122) et l'appareil de lecture (110), dans lequel la liaison de communication est une liaison en champ proche, dans lequel le procédé de communication comprend en outre l'étape consistant à enregistrer la carte électronique d'assurance-maladie (122) sur l'appareil de lecture, l'enregistrement comprenant les étapes consistant à :
- lire optiquement un identificateur (136) de la carte électronique d'assurance-maladie (122) par l'appareil de lecture, l'identificateur comprenant des colorants fluorescents ou phosphorescents, et l'identificateur étant excité à l'aide d'une longueur d'onde lumineuse pour produire une phosphorescence, et la lecture s'effectuant à une longueur d'onde lumineuse dans la gamme de longueurs d'onde dans laquelle l'identificateur émet une lumière fluorescente ou phosphorescente ;
- effectuer une procédure de défis et de réponses entre la carte électronique d'assurance-maladie (122) et l'appareil de lecture, un chiffrement dans la procédure de défis et de réponses étant un chiffrement utilisant l'identificateur et la procédure de défis et de réponse comprenant en outre les étapes consistant à :
• recevoir une clef d'autorisation d'une carte d'identification de profession de santé sur l'appareil de lecture (110) ;
• générer une clef de session (132) à partir de l'identificateur et de la clef d'autorisation sur l'appareil de lecture ;
• effectuer la procédure de défis et de réponses en utilisant la clef de session (132), la clef de session étant en outre stockée dans une zone de mémoire sécurisée de la carte électronique d'assurance-maladie (122) ;
- après le succès de la procédure de défis et de réponses, authentifier l'appareil de lecture vis-à-vis de la carte électronique d'assurance-maladie (122) ;
l'étape d'authentification comprenant les étapes suivantes consistant à :
• recevoir un certificat numérique (138) par la carte électronique d'assurance-maladie (122), en provenance de l'appareil de lecture ;
• vérifier le certificat par la carte électronique d'assurance-maladie (122), l'appareil de lecture (110) étant authentifié lorsque la vérification du certificat réussit ;
• après le succès de la vérification du certificat, valider la transmission de données entre la carte électronique d'assurance-maladie (122) et l'appareil de lecture, les données qu'il est prévu de transmettre étant déterminées par les autorisations d'accès spécifiées dans le certificat et les données étant stockées sur la carte électronique d'assurance-maladie (122) ;
- dans lequel, après le succès de la vérification du certificat, des données d'images (140) stockées dans la carte d'assurance-maladie (122) sont envoyées par la carte d'assurance-maladie (122) à l'appareil de lecture (110), les données d'image comprenant au moins une image du visage du titulaire de la carte d'assurance-maladie (122) ; et
- l'image contenue dans les données d'image est affichée visuellement sur l'appareil de lecture (110) ou sur un système de traitement de données raccordé à l'appareil de lecture (110) afin de permettre un contrôle visuel ;
dans lequel l'identification est une clef publique de carte d'assurance-maladie, dans lequel en outre la carte électronique d'assurance-maladie (122) stocke une clef privée de carte d'assurance-maladie et dans lequel la clef publique et la clef privée de carte d'assurance-maladie forment une paire de clefs cryptographiques asymétriques.

2. Produit programme d'ordinateur (114 ; 130) comportant des instructions exécutables par un processeur afin de mettre en oeuvre les étapes du procédé selon la revendication 1.
